(19) **Europäisches Patentamt**
**European Patent Office**
**Office européen des brevets**

(11) **EP 2 436 541 B1**

(12) **EUROPEAN PATENT SPECIFICATION**

(45) Date of publication and mention
of the grant of the patent:
**14.01.2015 Bulletin 2015/03**

(51) Int Cl.:
**B60G 17/015** (2006.01)   **B60G 7/00** (2006.01)

(21) Application number: **10769832.6**

(22) Date of filing: **30.04.2010**

(86) International application number:
**PCT/JP2010/057683**

(87) International publication number:
**WO 2010/126134 (04.11.2010 Gazette 2010/44)**

(54) **CAMBER CONTROL DEVICE**

STURZSTEUERVORRICHTUNG

DISPOSITIF DE COMMANDE DE CARROSSAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **01.05.2009   JP 2009111928
22.04.2010   JP 2010098609**

(43) Date of publication of application:
**04.04.2012   Bulletin 2012/14**

(73) Proprietor: **Equos Research Co., Ltd.
Chiyoda-ku
Tokyo 101-0021 (JP)**

(72) Inventors:
• **HORIGUCHI, Munehisa
Tokyo 101-0021 (JP)**
• **ANDO, Masao
Tokyo 101-0021 (JP)**

(74) Representative: **TBK
Bavariaring 4-6
80336 München (DE)**

(56) References cited:
**EP-A1- 1 712 449      EP-A1- 2 036 745
WO-A1-2010/001802   JP-A- 4 310 468
JP-A- 2008 030 730     US-B1- 6 347 802
US-B1- 6 347 802**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a camber control device.

BACKGROUND ART

In a vehicle conventionally provided, a camber angle is applied to a vehicle wheel in order to increase vehicle stability during acceleration, braking, turning, and the like.

In such a vehicle, a hydraulic cylinder is provided in an actuator for applying a camber angle and canceling camber angle application. A hydraulic motor that serves as a drive section supplies and cancels a hydraulic pressure to the hydraulic cylinder, thus operating the hydraulic cylinder (e.g., see Patent Document 1).
Patent Document 1: U.S. Patent No. 6,347,802

EP 2036745 A1 discloses another can be control device, according to the preamble of claim 1.

DISCLOSURE OF THE INVENTION

Problem to be Solved by the Invention

In the conventional vehicle described above, a prescribed hydraulic pressure must be supplied to the hydraulic cylinder to apply a camber angle to the vehicle wheel, thus increasing the hydraulic motor in size. The efficiency of an engine for driving the hydraulic motor is lowered and the fuel economy of the vehicle is reduced accordingly.

An actuation speed of the hydraulic motor for applying a camber angle to the vehicle wheel and an actuation speed of the hydraulic motor for canceling camber angle application to the vehicle wheel are unknown for the vehicle described above. However, if the actuation speed of the hydraulic motor is the same when both applying a camber angle to the vehicle wheel and canceling camber angle application to the vehicle wheel, the design of the hydraulic motor must consider a load applied to the hydraulic motor and be based on a maximum load requirement. The hydraulic motor thus increases in size, and the size and cost of the vehicle also increase as a consequence.

It is an object of the present invention to provide a camber control device that solves the problems of the conventional vehicle described above, and reduces a drive section in size, reduces a vehicle in size, and lowers a vehicle cost.

Means for Solving the Problem

A camber control device according to the present invention thus includes: a body of a vehicle; a plurality of vehicle wheels provided rotatable relative to the body; an actuator, provided between a prescribed vehicle wheel among the vehicle wheels and the body, for applying and canceling application of a camber angle to the prescribed vehicle wheel; first actuator drive processing means for applying the camber angle to the prescribed vehicle wheel by driving the actuator if a camber angle application condition is established; and second actuator drive processing means for canceling the camber angle applied to the prescribed vehicle wheel by driving the actuator if a camber angle application cancellation condition is established.

An actuation speed for driving the actuator by the first actuator drive processing means is higher than an actuation speed for driving the actuator by the second actuator drive processing means.

Effects of the Invention

According to the present invention, a camber control device includes: a body of a vehicle; a plurality of vehicle wheels provided rotatable relative to the body; an actuator, provided between a prescribed vehicle wheel among the vehicle wheels and the body, for applying and canceling application of a camber angle to the prescribed vehicle wheel; first actuator drive processing means for applying the camber angle to the prescribed vehicle wheel by driving the actuator if a camber angle application condition is established; and second actuator drive processing means for canceling the camber angle applied to the prescribed vehicle wheel by driving the actuator if a camber angle application cancellation condition is established.

An actuation speed for driving the actuator by the first actuator drive processing means is higher than an actuation speed for driving the actuator by the second actuator drive processing means.

In this case, when the camber angle application condition is established, the actuation speed for driving the actuator by the first actuator drive processing means is higher than the actuation speed for driving the actuator by the second actuator drive processing means. Therefore, the camber angle can be rapidly applied to the prescribed vehicle wheel, and vehicle stability can be increased during acceleration, braking, turning, and the like.

Meanwhile, when the camber angle application cancellation condition is established, the actuation speed for driving the actuator is low. Therefore, a drive section of the actuator can be reduced in size, the vehicle can be reduced in size, and a vehicle cost can be lowered.

Moreover, the efficiency of an engine for driving the drive section can be improved, whereby the fuel economy of the vehicle can be increased.

BRIEF DESCRIPTION OF THE DRAWINGS

[FIG. 1] FIG. 1 is a schematic diagram of a vehicle according to a first embodiment of the present invention.

[FIG. 2] FIG. 2 is a diagram that shows a support structure of a vehicle wheel according to the first embodiment of the present invention.

[FIG. 3] FIG. 3 is a block diagram of a vehicle control according to the first embodiment of the present invention.

[FIG. 4] FIG. 4 is a diagram that shows a dynamic model of the vehicle wheel according to the first embodiment of the present invention.

[FIG. 5] FIG. 5 is a diagram of the relationship between a motor rotational speed and a motor torque.

[FIG. 6] FIG. 6 is a block diagram of a vehicle control according to a second embodiment of the present invention.

[FIG. 7] FIG. 7 is a diagram that shows a camber drive circuit section according to the second embodiment of the present invention.

[FIG. 8] FIG. 8 is a flowchart that shows the operation of camber control processing means according to the second embodiment of the present invention.

[FIG. 9] FIG. 9 is a diagram that shows an essential portion of an actuator according to a third embodiment of the present invention.

Description of the Reference Numerals

11: Body
16: Control section
31 to 34: Actuator
WLF, WRF, WLB, WRB: Vehicle wheel

BEST MODES FOR CARRYING OUT THE INVENTION

Hereinafter, embodiments of the present invention will be described in detail with reference to the drawings.

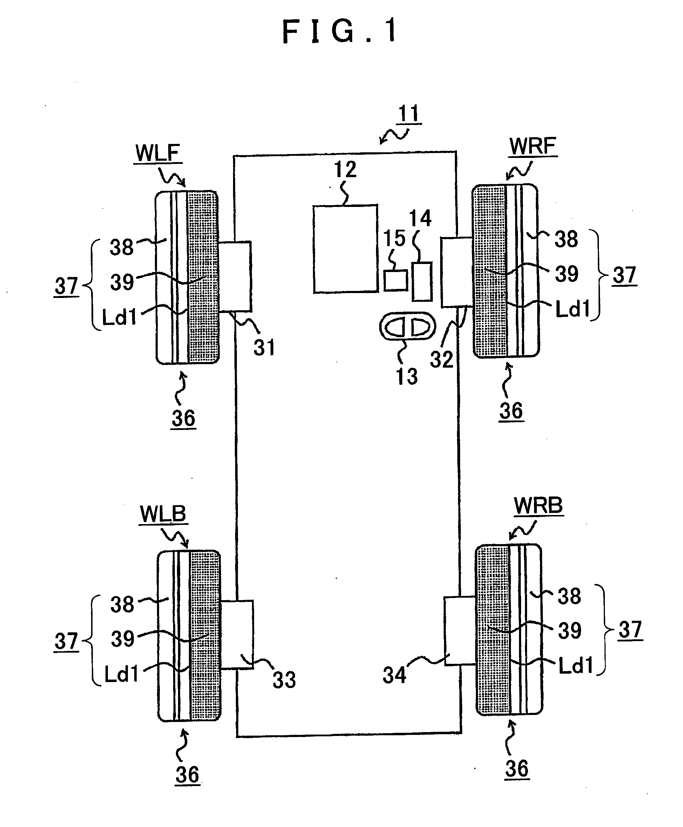

FIG. 1 is a schematic diagram of a vehicle according to a first embodiment of the present invention.

In the diagram, reference numeral 11 denotes a body that is a main body of the vehicle; 12 denotes an engine that serves as a drive source; and WLF, WRF, WLB, WRB respectively denote left-front, right-front, left-back, and right-back vehicle wheels provided rotatable relative to the body 11. The vehicle wheels WLF, WRF constitute front wheels and the vehicle wheels WLB, WRB constitute rear wheels. Each of the vehicle wheels WLF, WRF, WLB, WRB includes a wheel (not shown) made from an aluminum alloy or the like, and a tire 36 that is provided meshed with the outer circumference of the wheels. Note that, in this case, the vehicle has a front-wheel-drive structure, and the engine 12 and the vehicle wheels WLF, WRF are connected by a drive shaft (not shown). A rotation generated by driving the engine 12 is transmitted to the vehicle wheels WLF, WRF. The vehicle wheels WLF, WRF are thus rotated and function as driving wheels.

Although the vehicle has a front-wheel-drive structure in the present embodiment, the vehicle may have a rear-wheel-drive structure, a four-wheel-drive structure, or other structure. In such case, the engine 12 and the vehicle wheels WLB, WRB are connected by a propeller shaft, a differential device, a drive shaft, and the like (not shown). In the case of rear-wheel-drive, a rotation generated by driving the engine 12 is transmitted to the vehicle wheels WLB, WRB. The vehicle wheels WLB, WRB are thus rotated and function as driving wheels. In the case of four-wheel-drive, a rotation generated by driving the engine 12 is transmitted to the vehicle wheels WLF, WRF, WLB, WRB. The vehicle wheels WLF, WRF, WLB, WRB are thus rotated and function as driving wheels. Further, although the rotation generated by driving the engine 12 is transmitted to the driving wheels in the present embodiment, a drive motor may be used as the drive source and a rotation generated by driving the drive motor may be transmitted to the driving wheels. Alternatively, a drive motor may be integratedly incorporated with each driving wheel, and the vehicle wheels may be rotated by independently driving each drive motor.

Reference numeral 13 denotes a steering wheel that serves as a steering device and also as an operating section used by an operator, i.e., a driver, to steer the vehicle; 14 denotes an accelerator pedal that serves as an acceleration operation member and also as an operating section used by the driver to accelerate the vehicle; and 15 denotes a brake pedal that serves as a braking operating member and also as an operating section used by the driver to brake the vehicle. When the driver operates the steering wheel 13 by rotating it, a steering angle is applied to the vehicle wheels WLF, WRF in accordance with a steering wheel angle that expresses an operation amount of the steering wheel 13 to turn the vehicle. When the driver depresses the accelerator pedal 14, the vehicle is accelerated in accordance with a depression amount (stroke) that expresses an operation amount of the accelerator pedal 14. When the driver depresses the brake pedal 15, the vehicle is braked in accordance with a depression amount that expresses an operation amount of the brake pedal 15. Note that the steering angle is an angle formed by the orientation of the vehicle wheels WLF, WRF with respect to the longitudinal direction of the vehicle when the orientation of the vehicle wheels WLF, WRF is changed in response to the rotation of the steering wheel 13.

The steering wheel 13, the accelerator pedal 14, the brake pedal 15, and the like constitute a steering element of the vehicle. Operation states of the vehicle are expressed by the steering wheel angle, the steering angle, the depression amount of the accelerator pedal 14, the depression amount of the brake pedal 15, and the like.

Reference numerals 31, 32 denote actuators (vehicle wheel drive sections) that are respectively provided between the body 11 and the vehicle wheels WLF, WRF, and rotatably support the vehicle wheels WLF, WRF. The actuators independently form a steering angle and independently apply a camber angle with respect to the vehicle wheels WLF, WRF. Reference numerals 33, 34 denote actuators that are respectively provided between the body 11 and the vehicle wheels WLB, WRB, and rotatably support the vehicle wheels WLB, WRB. The actuators independently form a steering angle and independently apply a camber angle with respect to the vehicle wheels WLB, WRB. Note that the actuators 31, 32 constitute a camber angle varying mechanism and a steering angle varying mechanism, and the actuators 33, 34 constitute a camber angle varying mechanism.

In each of the vehicle wheels WLF, WRF, WLB, WRB, a tread 37 of the tire 36 is divided into a plurality of areas (in the present embodiment, two areas) in the width direction with different levels of rolling resistance and grip performance. A center line that represents the center of the tread 37 in the width direction is a separation line Ld1. In such case, a low rolling resistance area 38 that serves as a first area is formed on an outer side of the separation line Ld1 (a side away from the body 11), and a high grip area 39 that serves as a second area is formed on an inner side of the separation line Ld1 (a side toward the body 11). The low rolling resistance area 38 has a small loss tangent, which results in a small rolling resistance generated on the tire 36 due to friction with the road surface and a low grip performance. The grip performance expresses a force gripping the road surface, that is, a gripping force. The high grip area 39 has a large loss tangent, which results in a large rolling resistance and a high grip performance.

Therefore, respectively different groove patterns (referred to as "tread patterns" below) are formed on the outer circumferential surfaces of the low rolling resistance area 38 and the high grip area 39. In other words, the low rolling resistance area 38 is formed with a rib type of tread pattern in which there are continuous grooves in the circumferential direction of the tire 36, and the high grip area 39 is formed with a lug type of tread pattern in which there are continuous grooves in the width direction of the tire 36. In addition, a block type of tread pattern that has a plurality of independent blocks may be formed in the high grip area 39.

In the present embodiment, the low rolling resistance area 38 and the high grip area 39 are formed by using different tread patterns. However, the low rolling resistance area 38 and the high grip area 39 may also be formed by using different materials for the tread 37.

Note that the loss tangent indicates the degree of energy absorption when the tread 37 deforms, and can be expressed as the ratio of a loss shear modulus to a storage shear modulus. A smaller loss tangent is accompanied by less energy absorption, which results in a smaller rolling resistance generated on the tire 36, a lower grip performance, and less friction generated on the tire 36. However, a larger loss tangent is accompanied by more energy absorption, which results in a larger rolling resistance, a higher grip performance, and more friction generated on the tire 36.

In the present embodiment, the separation line Ld1 is placed at the center of the tread 37 in the width direction. However, the separation line Ld1 may be placed at any position on the tread 37 in the width direction to change the ratio between the respective contact patch areas of the low rolling resistance area 38 and the high grip area 39.

According to the present embodiment, the rolling resistance decreases when the low rolling resistance area 38 contacts the ground during normal vehicle travel, thus improving fuel economy. In addition, the grip performance increases when the high grip area 39 contacts the ground during vehicle acceleration, braking, turning, and the like, thus increasing vehicle stability by increasing the acceleration performance of the vehicle, shortening the braking distance, and preventing the occurrence of lateral slip.

Next, the actuators 31 to 34 for respectively applying a camber angle to the vehicle wheels WLF, WRF, WLB, WRB will be described. In this case, the camber angle varying mechanisms for the actuators 31 to 34 are the same so only the vehicle wheel WLF and the actuator 31 will be explained here.

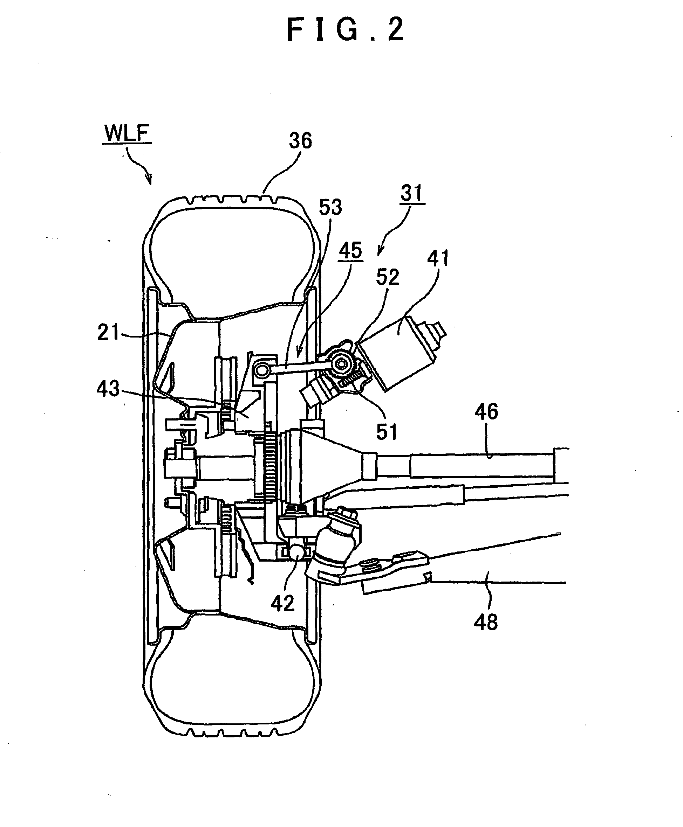

FIG. 2 is a diagram that shows a support structure of the vehicle wheel according to the first embodiment of the present invention.

In the diagram, reference numeral WLF denotes the vehicle wheel; 21 denotes the wheel; 31 denotes the actuator; and 36 denotes the tire provided on the wheel 21.

The actuator 31 includes a motor 41 that serves as a camber control drive section and is fixed to a knuckle (not shown) that serves as a base member; a movable plate 43 that serves as a movable member and is slidably provided on the knuckle so as to pivot around a camber shaft 42; a crank mechanism 45 that serves as a movement-direction conversion section and converts a rotational movement of the motor 41 into a pivoting movement of the movable plate 43; a drive shaft 46 that serves as a transmission shaft and transmits the rotation of the engine 12 (FIG. 1) to the wheel 21; and a lower arm 48 that serves as a steering member and changes the orientation of the vehicle wheel WLF in accordance with the driver operating the steering wheel 13. Note that a direct current motor is used as the motor 41.

The wheel 21 is supported rotatable relative to the movable plate 43, and connected to the drive shaft 46.

The crank mechanism 45 includes a worm gear 51 that serves as a first conversion element and is attached to an output shaft of the motor 41; a worm wheel 52 that serves as a second conversion element, and is meshed with the worm gear 51 and provided rotatable relative to the knuckle; and an arm 53 that serves as a third conversion element and is connected to the worm wheel 52 and the movable plate 43. The arm 53 has one end connected to the worm wheel 52 by a first connection portion at a position offset from a rotation shaft of the worm wheel 52, and the other end connected to the movable plate 43 by a second connection portion at a position on an upper end of the movable plate 43. In this case, the movable plate 43 constitutes a fourth conversion element.

The worm gear 51 and the worm wheel 52 convert the orientation of the shaft moving in a rotating manner, the worm wheel 52 and the arm 53 convert the rotational movement into a linear movement, and the arm 53 and the movable plate 43 convert the linear movement into a pivoting movement.

Thus, driving the motor 41 rotates the worm gear 51 and the worm wheel 52, which extends and retracts the arm 53, which pivots the movable plate 43. As a consequence, a camber angle that corresponds to an inclination angle of the movable plate 43 is applied to the vehicle wheel WLF.

Next, a control device of the vehicle thus configured will be described.

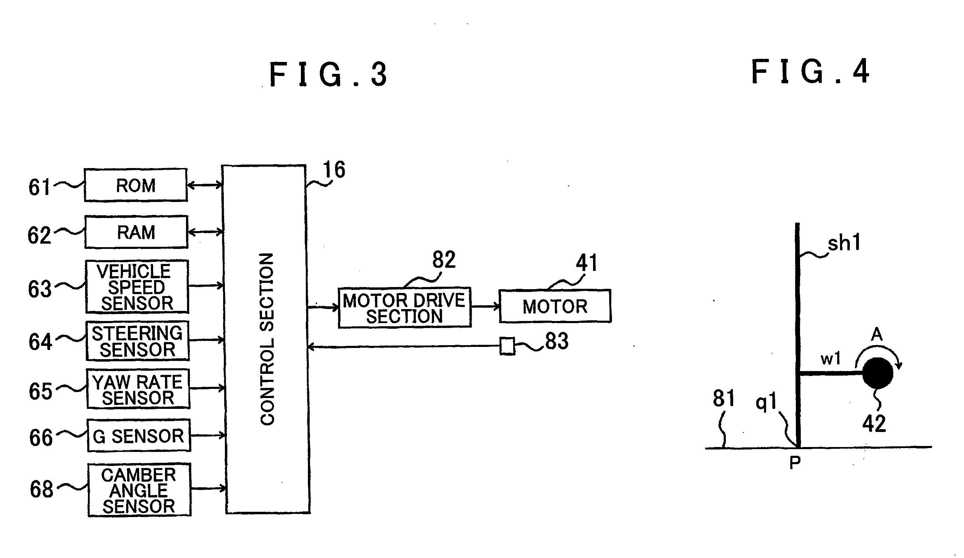

FIG. 3 is a block diagram of a vehicle control according to the first embodiment of the present invention.

In the diagram, reference numeral 16 denotes a control section that performs an overall control of the vehicle and constitutes a computer; 41 denotes a motor provided for each of the vehicle wheels WLF, WRF, WLB, WRB (FIG. 1); 61 denotes a ROM that serves as a first memory section; 62 denotes a RAM that serves as a second memory section; 63 denotes a vehicle speed sensor that serves as a vehicle speed detection section and detects the vehicle speed; 64 denotes a steering sensor that serves as a steering detection section and detects the steering wheel angle of the steering wheel 13; 65 denotes a yaw rate sensor that serves as a yaw rate detection section and detects the yaw rate of the vehicle; 66 denotes a G sensor that serves as an acceleration detection section and detects a lateral G and a longitudinal G; 68 denotes a camber angle sensor that serves as a camber angle detection section and detects the camber angle applied to each of the vehicle wheels WLF, WRF, WLB, WRB; 82 denotes a motor drive section for driving the motor 41; and 83 denotes an encoder that serves as a rotational speed detection section and detects the rotational speed of the motor 41, that is, the motor rotational speed.

The vehicle speed sensor 63, the yaw rate sensor 65, the G sensor 66, the camber angle sensor 68, and the like constitute a vehicle state detection section. Vehicle states are expressed by the vehicle speed, the yaw rate, the lateral G, the longitudinal G, the camber angle, and the like.

In the vehicle thus configured, camber control processing means (not shown) of the control section 16 performs camber control processing such that, during normal vehicle travel, fuel economy is improved by making the low rolling resistance area 38 contact the road surface. However, if parameters such as the operation amounts of the accelerator pedal 14, the brake pedal 15, the steering wheel 13, and the like generated by the driver, and the acceleration of the lateral G, the longitudinal G, and the yaw rate acting on the vehicle satisfy fixed conditions during vehicle acceleration, braking, turning, and the like, the camber control processing means performs the camber control processing so as to increase vehicle stability by making the high grip area 39 contact the road surface through the application of a negative camber angle to a prescribed vehicle wheel among the vehicle wheels WLF, WRF, WLB, WRB, (in the present embodiment, all the vehicle wheels WLF, WRF, WLB, WRB). Note that, in the present embodiment, the low rolling resistance area 38 contacts the road surface when a camber angle is not applied.

Therefore, in the camber control processing means, processing means for determining establishment of a condition for applying a camber angle performs a process for determining establishment of a condition for applying a camber angle. Such camber angle application condition establishment determination processing means determines whether a camber angle application condition that expresses the condition for applying a camber angle is established by reading each of the parameters, and comparing each parameter with a first threshold set for each parameter.

In other words, if at least one parameter among the parameters is greater than the first threshold, it can be determined that sudden acceleration, sudden braking, sudden turning, or the like is performed. Thus, the camber angle application condition establishment determination processing means determines that the camber angle application condition is established. Then, camber setting processing means of the camber control processing means performs a camber setting process and outputs a camber-on command.

Further, in the camber control processing means, processing means for determining establishment of a condition for canceling camber angle application performs a process for determining establishment of a condition for canceling camber angle application. Such camber angle application cancellation condition establishment determination processing means determines whether a camber angle application cancellation condition that expresses a condition for canceling the application of a camber angle is established by comparing each parameter with a second threshold set for each parameter that is lower than the first threshold by a prescribed value.

In other words, if each parameter is less than the second threshold, it can be determined that no sudden acceleration, sudden braking, sudden turning, or the like is being performed. Therefore, the camber angle application cancellation condition establishment determination processing means determines that the camber angle application cancellation condition is established.

If it is thus determined that the camber angle application cancellation condition is established, the camber setting processing means outputs a camber-off command.

As described earlier, in the present embodiment, a camber angle is applied to the vehicle wheels WLF, WRF, WLB, WRB and camber angle application is cancelled by driving the actuators 31 to 34. However, the vehicle wheels WLF, WRF, WLB, WRB are each subjected to a load corresponding to the vehicle weight from the road surface, which generates a moment that attempts to rotate the vehicle wheels WLF, WRF, WLB, WRB in the application direction of the negative camber angle around the camber shaft 42.

Therefore, a motor torque required by the motor 41 to apply a camber angle to the vehicle wheels WLF, WRF, WLB, WRB decreases by an amount corresponding to the moment, and a motor torque required by the motor 41 to cancel camber angle application increases by an amount corresponding to the moment.

Next, a dynamic model of the vehicle wheels WLF, WRF, WLB, WRB will be explained. In this case, the vehicle wheels WLF, WRF, WLB, WRB have the same structure so only the vehicle wheel WLF will be described.

FIG. 4 is a diagram that shows the dynamic model of the vehicle wheel according to the first embodiment of the present invention.

In the diagram, reference numeral 42 denotes the camber shaft; 81 denotes a road surface; and sh1 denotes an axis that extends orthogonally upward from a contact point q1 between the vehicle wheel WLF and the road surface 81.

If P is a load applied to the tire 36 from the road surface 81 at the contact point q1 and w1 is a distance between the camber shaft 42 and the axis sh1, a moment M attempting to rotate the vehicle wheel WLF in the direction of an arrow A around the camber shaft 42 occurs and is expressed as follows.

$$M = P \cdot w1$$

When the vehicle wheel WLF is rotated in the direction of the arrow A, if Tf is a required torque against a friction force generated by a shaft, a bearing, or the like, Ta is a motor torque required by the motor 41 to apply a camber angle to the vehicle wheel WLF, and Td is a motor torque required by the motor 41 to cancel camber angle application, then the following holds true.

$$Ta = Tf - M$$

$$= Tf - P \cdot w1$$

$$Td = Tf + M$$

$$= Tf + P \cdot w1$$

In this case, the motor torque Td is larger than the motor torque Ta. Therefore, designing the motor 41 in consideration of the motor torque Td increases the motor 41 in size, which also increases the size of the vehicle and leads to a higher vehicle cost.

Next, the relationship between a motor rotational speed N and a motor torque T will be described.

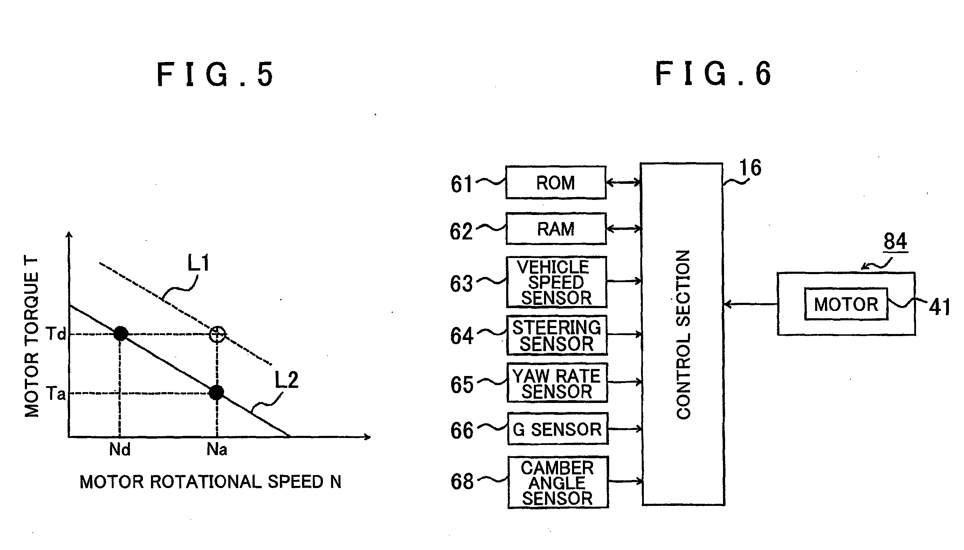

FIG. 5 is a diagram of the relationship between the motor rotational speed and the motor torque. In the diagram, the horizontal axis is the motor rotational speed N and the vertical axis is the motor torque T.

In general, driving the motor at a lower motor rotational speed N produces a larger motor torque T, while driving the motor at a higher motor rotational speed N produces a smaller motor torque T.

However, applying a camber angle to the vehicle wheels WLF, WRF, WLB, WRB necessitates the high grip area 39 contacting the road surface in a short time to increase vehicle stability, which requires rapid application of the camber angle. Thus, to drive the motor 41 at a sufficiently high first rotational speed Na and produce the motor torque Td, a large motor having a characteristic expressed by a line L1 must be used as the motor 41.

Meanwhile, canceling camber angle application to the vehicle wheels WLF, WRF, WLB, WRB does not necessitate the low rolling resistance area 38 contacting the road surface in a short time nor improved fuel economy, which means there is no need to rapidly cancel the application of the camber angle.

Hence, if the motor 41 drives at the first rotational speed Na and produces the motor torque Ta to apply a camber angle to the vehicle wheels WLF, WRF, WLB, WRB, and drives at a second rotational speed Nd that is lower than the first rotational speed Na and produces the motor torque Td to cancel camber angle application to the vehicle wheels WLF, WRF, WLB, WRB, a small motor having a characteristic expressed by a line L2 can be used as the motor 41.

Next, using the motor 41 having the characteristic expressed by the line L2, the operation of the camber control processing means when applying a camber angle to the vehicle wheels WLF, WRF, WLB, WRB and when canceling camber angle application will be described.

Specifically, if the camber angle application condition establishment determination processing means determines that the camber angle application condition is established, motor forward drive processing means that serves as first actuator drive processing means and as first motor drive processing means of the camber control processing means performs a motor forward drive process that serves as a first actuator drive process and as a first motor drive process, whereby the motor 41 drives in the forward direction at the first rotational speed Na based on a speed control.

Therefore, the motor forward drive processing means sets the first rotational speed Na as a target rotational speed Nsa, reads a motor rotational speed Np detected by the encoder 83, and calculates a difference ΔNa between the target rotational speed Nsa and the motor rotational speed Np. The motor forward drive processing means generates a drive signal based on the difference ΔNa and transmits the drive signal to the motor drive section 82. Then, a prescribed current is generated by the motor drive section 82 and transmitted to the motor 41. Consequently, the motor 41 drives in the forward direction.

Once a camber angle detected by the camber angle sensor 68 corresponds to a preset camber angle, the motor forward drive processing means stops driving of the motor 41.

Thus, the motor torque Ta is produced by the motor 41, and a camber angle can be applied to the vehicle wheels WLF, WRF, WLB, WRB.

If the camber angle application cancellation condition establishment determination processing means subsequently determines that the camber angle application cancellation condition is established, motor reverse drive processing means that serves as second actuator drive processing means and as second motor drive processing means of the camber control processing means performs a motor reverse drive process that serves as a second actuator drive process and as a second motor drive process, whereby the motor 41 drives in the reverse direction at the second rotational speed Nd based on a speed control.

Therefore, the motor reverse drive processing means sets the second rotational speed Nd as a target rotational speed Nsd, reads the motor rotational speed Np detected by the encoder 83, and calculates a difference ΔNd between the target rotational speed Nsd and the motor rotational speed Np. The motor reverse drive processing means generates a drive signal based on the difference ΔNd and transmits the drive signal to the motor drive section 82. Then, a prescribed current is generated by the motor drive section 82 and transmitted to the motor 41. Consequently, the motor 41 drives in the reverse direction.

Once the camber angle detected by the camber angle sensor 68 corresponds to a preset camber angle (e.g., zero (0)), the motor reverse drive processing means stops driving of the motor 41.

Thus, the motor torque Td is produced by the motor 41, and camber angle application to the vehicle wheels WLF, WRF, WLB, WRB can be cancelled.

Accordingly, in the present embodiment, an actuation speed for driving the actuators 31 to 34 to apply a camber angle to the vehicle wheels WLF, WRF, WLB, WRB is higher than an actuation speed for driving the actuators 31 to 34 to cancel camber angle application. Therefore, the motor torque produced by the motor 41 can be decreased by a corresponding amount. Thus, the motor 41 can be reduced in size, the vehicle can be reduced in size, and the vehicle cost can be lowered.

Next, a second embodiment, of the present invention will be described. Note that parts of the second embodiment similar in structure to the first embodiment are referred to by like reference numerals, and effects of the invention produced by such parts having similar structures are incorporated into the effects of the present embodiment.

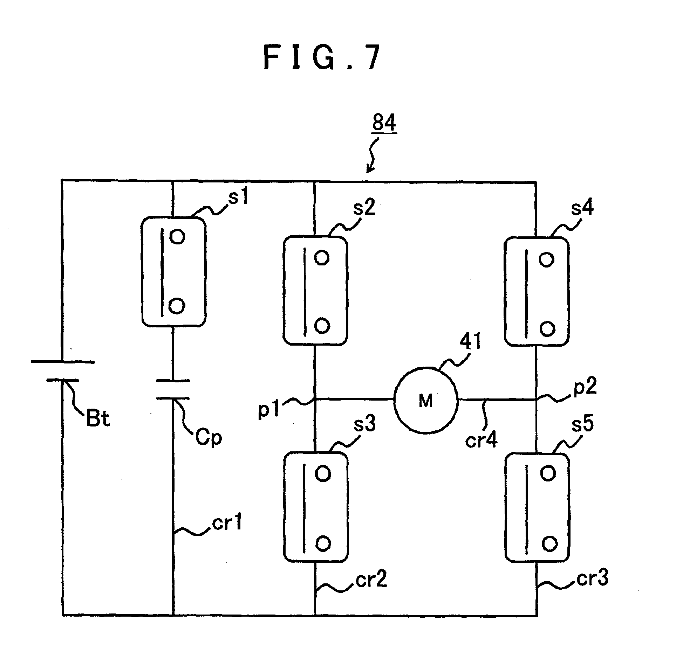

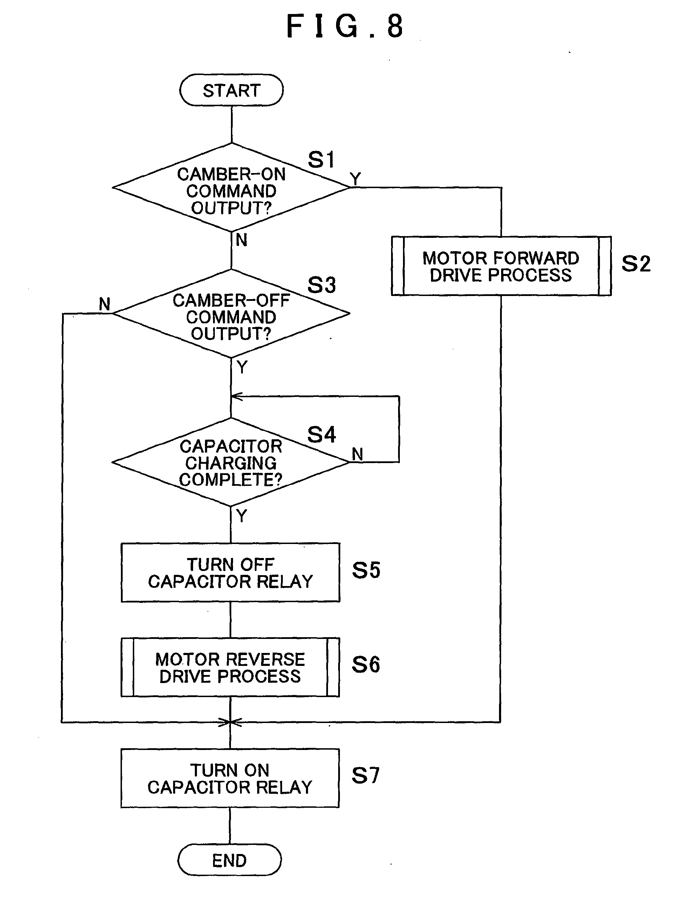

FIG. 6 is a block diagram of a vehicle control according to the second embodiment of the present invention. FIG. 7 is a diagram that shows a camber drive circuit section according to the second embodiment of the present invention. FIG. 8 is a flowchart that shows the operation of the camber control processing means according to the second embodiment of the present invention.

In FIGS. 6 and 7, reference numeral 84 denotes a camber drive circuit section; Bt denotes a battery that serves as a first electrical storage device; Cp denotes a capacitor that serves as a second electrical storage device; 41 denotes the motor that serves as the camber control drive section; s1 denotes a capacitor relay that serves as a first switch element; and s2 to s5 denote switch relays that serve as second to fifth switch elements. The capacitor relay s1 is provided for connecting and disconnecting the capacitor Cp from the battery Bt. The capacitor relay s1 and the switch relays s2 to s5 are each turned on and off after receiving a drive signal from the control section 16.

In the present embodiment, relays such as the capacitor relay and the switch relays are used as the switch elements. However, transistors or the like may be used as the switch elements instead. Note that the battery Bt and the capacitor Cp constitute a power supply device. Further note that, in place of the capacitor Cp, a condenser that serves as the second electrical storage device and as a charging element may be used.

First to third circuit sections cr1 to cr3 are connected to the battery Bt in parallel with each other. The first circuit section cr1 is connected in series to the capacitor relay s1 and the capacitor Cp. The second circuit section cr2 is connected in series to the switch relays s2, s3. The third circuit section cr3 is connected in series to the switch relays s4, s5. The motor 41 is provided in a fourth circuit section cr4 that is formed by connecting a connection section p1 of the switch relays s2, s3 and a connection section p2 of the switch relays s4, s5.

Note that, in an initial state, the capacitor relay s1 is on and the switch relays s2 to s5 are off. A current (direct current) is supplied from the battery Bt to the capacitor Cp, and the capacitor Cp is charged.

Next, the operation of the camber control processing means will be described.

First, the camber control processing means stands by until the camber-on command is output. Once the camber-on command is output, the motor forward drive processing means of the camber control processing means turns on the switch relays s2, s5 and turns off the switch relays s3, s4.

Consequently, the current from the battery Bt flows to the switch relay s2, the motor 41, and the switch relay s5, and the current from the capacitor Cp flows to the capacitor relay s1, the switch relay s2, the motor 41, and the switch relay s5, thus driving the motor 41 in the forward direction and applying a preset camber angle to the vehicle wheels WLF, WRF, WLB, WRB. In this case, the camber angle sensor 68 that serves as the camber angle detection section detects the camber angle applied to the vehicle wheels WLF, WRF, WLB, WRB. When the detected camber angle is equal to a set camber angle, the motor forward drive processing means turns off the switch relays s2, s4 and turns on the switch relays s3, s5. As a result, the motor 41 and the switch relays s3, s5 are connected and the current is shorted, which short-circuit brakes and stops the motor 41.

Thus, if the camber-off command is output while a large current is supplied to the motor 41 and the motor 41 is driven in the forward direction, charging-complete determination processing means of the camber control processing means performs a charging-complete determination process and stands by until charging of the capacitor Cp is complete. Note that the currents from the battery Bt and the capacitor Cp constitute a camber angle application current.

Once charging of the capacitor Cp is complete, power supply switching processing means of the camber control processing means performs a power supply switching process and turns off the capacitor relay s1.

Next, the motor reverse drive processing means of the camber control processing means turns off the switch relays s2, s5 and turns on the switch relays s3, s4.

Consequently, the current from the battery Bt flows to the switch relay s4, the motor 41, and the switch relay s3, thus driving the motor 41 in the reverse direction and canceling camber angle application. The camber angle applied to the vehicle wheels WLF, WRF, WLB, WRB is therefore zero. In this case, the camber angle applied to the vehicle wheels WLF, WRF, WLB, WRB is detected by the camber angle sensor 68, and the motor reverse drive processing means turns off the switch relays s2, s4 and turns on the switch relays s3, s5 when the detected camber angle becomes zero. As a result, the motor 41 and the switch relays s3, s5 are connected and the current is shorted, which short-circuit brakes and stops the motor 41.

Thus, a small current is supplied to the motor 41 and the power supply switching processing means subsequently turns on the capacitor relay s1. Note that the current from the battery Bt constitutes a camber angle application cancellation current.

According to the present embodiment, to apply a camber angle to the vehicle wheels WLF, WRF, WLB, WRB, the motor 41 is supplied with a sufficiently large first current, that is, a sufficiently large first power, from the battery Bt and the capacitor Cp, which increases the actuation speed for driving the actuators 31 to 34. Therefore, a camber angle can be rapidly applied to the vehicle wheels WLF, WRF, WLB, WRB. Vehicle stability during acceleration, braking, turning, and the like can thus be increased.

In addition, to cancel camber angle application to the vehicle wheels WLF, WRF, WLB, WRB, the motor 41 is supplied with a second current smaller than the first current, that is, a second power smaller than the first power, from the battery Bt, which decreases the actuation speed for driving the actuators 31 to 34. Therefore, the battery Bt and the capacitor Cp can each have a smaller capacity compared to driving the actuators 31 to 34 using only the battery Bt. Accordingly, the battery Bt and the capacitor Cp can be reduced in size, the vehicle can be reduced in size, and the vehicle cost can be lowered. Moreover, the efficiency of the engine 12 that serves as the drive source for driving the motor 41 can be improved, whereby the fuel economy of the vehicle can be increased.

In addition, camber angle application to the vehicle wheels WLF, WRF, WLB, WRB is not canceled until charging of the capacitor Cp is complete, so the capacitor Cp can attain a sufficiently charged state. Therefore, even if a need to rapidly apply a camber angle to the vehicle wheels WLF, WRF, WLB, WRB arises, the camber angle can be surely applied.

The vehicle wheels WLF, WRF, WLB, WRB are affected by the vehicle load and biased toward the direction in which the negative camber angle is applied. Therefore, when driving the actuators 31 to 34 to apply a negative camber angle to the vehicle wheels WLF, WRF, WLB, WRB, the actuators 31 to 34 do not require a large drive force.

Thus, the actuation speed for driving the actuators 31 to 34 can be increased by the motor forward drive processing means.

The actuators 31 to 34 require a large drive force when the actuators 31 to 34 are driven to cancel the application of the negative camber angle to the vehicle wheels WLF, WRF, WLB, WRB. However, there is no need for the motor reverse drive processing means to increase the actuation speed for driving the actuators 31 to 34. Therefore, the motor 41 of the actuators 31 to 34 can be reduced in size.

Next, the flowchart will be described.

Step S1: It is determined whether the camber-on command is output. If the camber-on command is output, the routine advances to step S2. If the camber-on command is not output, the routine advances to step S3.

Step S2: The motor forward drive process is performed.

Step S3: It is determined whether the camber-off command is output. If the camber-off command is output, the routine advances to step S4. If the camber-off command is not output, the routine advances to S7.

Step S4: The routine stands by until charging of the capacitor Cp is complete. If charging of the capacitor Cp is complete, the routine advances to step S5.

Step S5: The capacitor relay s1 is turned off.

Step S6: The motor reverse drive process is performed.

Step S7: The capacitor relay s1 is turned on, and the routine is ended.

Next, a third embodiment of the present embodiment will be described, in which a hydraulic circuit is provided in each of the actuators 31 to 34 such that the hydraulic circuit applies a camber angle to the vehicle wheels WLF, WRF, WLB, WRB and cancels camber angle application to the vehicle wheels WLF, WRF, WLB, WRB. Note that parts of the third embodiment similar in structure to the first and second embodiments are referred to by like reference numerals, and effects of the invention produced by such parts having similar structures are incorporated into the effects of the present embodiment.

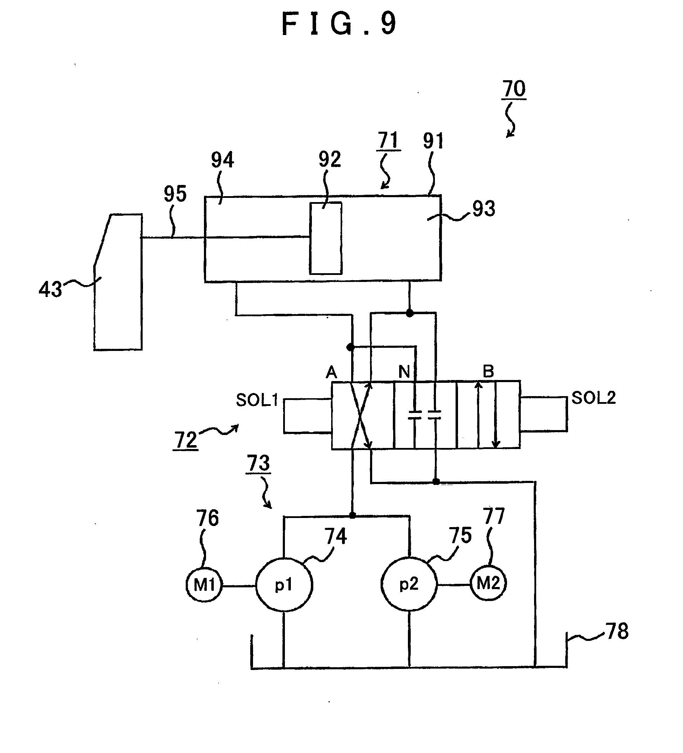

FIG. 9 is a diagram that shows an essential portion of the actuator according to the third embodiment of the present invention.

In the diagram, reference numeral 43 denotes the movable plate that serves as the movable member and 70 denotes a hydraulic circuit. The hydraulic circuit 70 includes a hydraulic cylinder 71 that serves as the drive section of the actuator 31 (FIG. 1), a control valve 72 that selectively supplies a hydraulic pressure to the hydraulic cylinder 71, a hydraulic source 73 for driving the hydraulic cylinder 71, and a hydraulic tank 78. The hydraulic source 73 includes a pump 74 (p1) that serves as a first hydraulic source, a pump 75 (p2) that serves as a second hydraulic source, and motors 76, 77 (M1, M2) for driving the pumps 74, 75.

The hydraulic cylinder 71 includes a cylinder body 91, and a piston 92 that is provided inside the cylinder body 91 and forms first and second oil chambers 93, 94. The piston 92 and the movable plate 43 are connected through a rod 95 that serves as a connection member. The control valve 72 adopts positions A, B, N by driving solenoids SOL1, SOL2. At the position A, the hydraulic source 73 and the first oil chamber 93 are communicated, and the second oil chamber 94 and the hydraulic tank 78 are communicated. At the position B, the hydraulic source 73 and the second oil chamber 94 are communicated, and the first oil chamber 93 and the hydraulic tank 78 are communicated. At the position N, the hydraulic source 73 is cut off from the first and second oil chambers 93, 94, and the hydraulic tank 78 is cut off from the first and second oil chambers 93, 94.

Next, the operation of the camber control processing means will be described.

In this case, once the camber-on command is output, first hydraulic cylinder drive processing means that serves as the first actuator drive processing means of the camber control processing means performs a first hydraulic cylinder drive process that serves as the first actuator drive process. The first hydraulic cylinder drive processing means drives the motors 76, 77, and places the control valve 72 at the position B by driving the solenoids SOL1, SOL2. Thus, the pumps 74, 75 are actuated, and oil discharged from the pumps 74, 75 is supplied to the second oil chamber 94 through the control valve 72, which causes the piston 92 and the rod 95 to retract. Consequently, a camber angle is applied to the vehicle wheels WLF, WRF, WLB, WRB.

If the camber-off command is output, second hydraulic cylinder drive processing means that serves as the second actuator drive processing means of the camber control processing means performs a second hydraulic cylinder drive process that serves as the second actuator drive process. The second hydraulic cylinder drive processing means drives one of the motors 76, 77 (in the present embodiment, the motor 76), and places the control valve 72 at the position A by driving the solenoids SOL1, SOL2. Thus, the pump 74 is actuated, and oil discharged from the pump 74 is supplied to the first oil chamber 93 through the control valve 72, which causes the piston 92 and the second oil chamber 94 to advance forward. Consequently, the application of the camber angle to the vehicle wheels WLF, WRF, WLB, WRB is cancelled.

According to the present embodiment, to apply a camber angle to the vehicle wheels WLF, WRF, WLB, WRB, a large amount of oil discharged from the pumps 74, 75 is supplied to the second oil chamber 94, which increases the actuation speed for driving the actuators 31 to 34. Therefore, a camber angle can be rapidly applied to the vehicle wheels WLF, WRF, WLB, WRB. Vehicle stability during acceleration, braking, turning, and the like can thus be increased.

In addition, to cancel camber angle application to the vehicle wheels WLF, WRF, WLB, WRB, a small amount of oil discharged from the pump 74 is supplied to the first oil chamber 93, which decreases the actuation speed for driving the actuators 31 to 34. Therefore, the pumps 74, 75 can each have a smaller discharge amount compared to driving the actuators 31 to 34 with only one pump. Accordingly, the hydraulic source 73 can be reduced in size, the vehicle can be reduced in size, and the vehicle cost can be lowered. Moreover, the efficiency of the engine 12 that serves as the drive source for driving the motors 76, 77 can be improved, whereby the fuel economy of the vehicle can be increased.

In the present embodiment, the motors 76, 77 are driven by the engine 12 to actuate the pumps 74, 75. However, the engine 12 may be connected to the pumps 74, 75, and the pumps 74, 75 directly actuated by the engine 12. In this case, a clutch may be provided as an engagement/disengagement member between the engine 12 and the pump 75, and the pump 75 selectively actuated by engaging and disengaging the clutch.

In the above embodiments, a vehicle is described in which the low rolling resistance area 38 and the high grip area 39 are formed on the tread 37 of the tire 36, and a camber angle is applied to the vehicle wheels WLF, WRF, WLB, WRB so as to selectively contact the low rolling resistance area 38 and the high grip area 39 with the road surface. However, the present invention may also be applied to a vehicle that uses a normal tire whose tread does not have a low rolling resistance nor a high grip area formed thereon, and applies a camber angle to increase turnability.

Further, in the above embodiments, a camber angle is applied to all the vehicle wheels WLF, WRF, WLB, WRB. However, a camber angle may be applied to only a prescribed vehicle wheel, such as the rear wheels WLB, WRB, for example.

Note that the present invention is not limited to the embodiments described above, and various modifications based on the intent of the invention are possible without departing from the scope of the present invention, as defined by the claims.

## Claims

1. A camber control device, **characterized by** comprising:

   a body (11) of a vehicle;
   a plurality of vehicle wheels (WLF, WRF, WLB, WRB) provided rotatable relative to the body (11);
   an actuator (31, 32, 33, 34), provided between a prescribed vehicle wheel among the vehicle wheels (WLF, WRF, WLB, WRB) and the body (11), for applying and canceling application of a camber angle to the prescribed vehicle wheel;
   first actuator drive processing means for applying the camber angle to the prescribed vehicle wheel by driving the actuator (31, 31, 33, 34) if a camber angle application condition is established; and
   second actuator drive processing means for canceling the camber angle applied to the prescribed vehicle wheel by driving the actuator (31, 31, 33, 34) if a camber angle application cancellation condition is established, **characterized in that**
   an actuation speed for driving the actuator (31, 31, 33, 34) by the first actuator drive processing means is higher than an actuation speed for driving the actuator by the second actuator drive processing means.

2. The camber control device according to claim 1, wherein
   the actuator (31, 31, 33, 34) includes a motor (41) that serves as a drive section for applying and canceling application of the camber angle to the prescribed vehicle wheel.

3. The camber control device according to claim 2, wherein
   the first actuator drive processing means drives the motor (41) at a first rotational speed, and
   the second actuator drive processing means drives the motor (41) at a second rotational speed that is lower than the first rotational speed.

4. The camber control device according to claim 2, wherein
   the first actuator drive processing means supplies a first power to the motor (41), and
   the second actuator drive processing means supplies a second power that is smaller than the first power to the motor (41).

5. The camber control device according to claim 1, wherein
   the actuator (31, 32, 33, 34) includes a hydraulic cylinder (71) that serves as a drive section for applying and canceling application of the camber angle to the prescribed vehicle wheel.

6. The camber control device according to any one of claims 1 to 5, wherein
   the first actuator drive processing means applies a negative camber angle to the prescribed vehicle wheel.

7. The camber control device according to any one of claims 1 to 6, wherein
   a plurality of areas with differing rolling resistance and grip performance is formed on a tire of the vehicle wheel to which the camber angle is applied,
   the first actuator drive processing means contacts an area with high grip performance to a road surface by applying the camber angle to the prescribed vehicle wheel, and
   the second actuator drive processing means contacts an area with a small rolling resistance to the road surface by canceling application of the camber angle to the prescribed vehicle wheel.

## Patentansprüche

1. Radsturzsteuervorrichtung, mit
   einer Karosserie (11) eines Fahrzeugs,
   einer Vielzahl von Fahrzeugrädern (WLF, WRF, WLB, WRB), die relativ zu der Karosserie (11) rotierbar bereitgestellt sind,

einem Aktor (31, 32, 33, 34), der zwischen einem vorbestimmten Fahrzeugrad aus den Fahrzeugrädern (WLF, WRF, WLB, WRB) und der Karosserie (11) für ein Anlegen und ein Beenden eines Anlegens eines Radsturzwinkels an das vorbestimmte Fahrzeugrad bereitgestellt ist,

einer ersten Aktoransteuerverarbeitungseinrichtung für ein Anlegen des Radsturzwinkels an das vorbestimmte Fahrzeugrad durch Ansteuern des Aktors (31, 32, 33, 34), wenn eine Radsturzwinkelanlegbedingung festgestellt ist, und

einer zweiten Aktoransteuerverarbeitungseinrichtung für ein Beenden des an das vorbestimmte Fahrzeugrad angelegten Radsturzwinkels durch Ansteuern des Aktors (31, 32, 33, 34), wenn eine Radsturzwinkelanlegbeendigungsbedingung festgestellt ist, **dadurch gekennzeichnet, dass**

eine Betätigungsgeschwindigkeit für ein Ansteuern des Aktors (31, 32, 33, 34) durch die erste Aktoransteuerverarbeitungseinrichtung größer als eine Betätigungsgeschwindigkeit für ein Ansteuern des Aktors durch die zweite Aktoransteuerverarbeitungseinrichtung ist.

2. Radsturzsteuervorrichtung nach Anspruch 1, wobei der Aktor (31, 32, 33, 34) einen Motor (41) umfasst, der als ein Antriebsabschnitt für ein Anlegen und ein Beenden eines Anlegens des Radsturzwinkels an das vorbestimmte Fahrzeugrad dient.

3. Radsturzsteuervorrichtung nach Anspruch 2, wobei die erste Aktoransteuerverarbeitungseinrichtung den Motor (41) mit einer ersten Rotationsgeschwindigkeit ansteuert, und

die zweite Aktoransteuerverarbeitungseinrichtung den Motor (41) mit einer zweiten Rotationsgeschwindigkeit ansteuert, die kleiner als die erste Rotationsgeschwindigkeit ist.

4. Radsturzsteuervorrichtung nach Anspruch 2, wobei die erste Aktoransteuerverarbeitungseinrichtung dem Motor (41) eine erste Energie zuführt, und

die zweite Aktoransteuerverarbeitungseinrichtung dem Motor (41) eine zweite Energie zuführt, die kleiner als die erste Energie ist.

5. Radsturzsteuervorrichtung nach Anspruch 1, wobei der Aktor (31, 32, 33, 34) einen Hydraulikzylinder (71) umfasst, der als ein Antriebsabschnitt für ein Anlegen und ein Beendigen eines Anlegens des Radsturzwinkels an das vorbestimmte Fahrzeugrad dient.

6. Radsturzsteuervorrichtung nach einem der Ansprüche 1 bis 5, wobei die erste Aktoransteuerverarbeitungseinrichtung einen negativen Radsturzwinkel an das vorbestimmte Fahrzeugrad anlegt.

7. Radsturzsteuervorrichtung nach einem der Ansprüche 1 bis 6, wobei

eine Vielzahl von Bereichen mit unterschiedlichem Rollwiderstand und unterschiedlicher Haftleistungsfähigkeit an einem Reifen des Fahrzeugrads gebildet ist, an das der Radsturzwinkel angelegt wird, und die erste Aktoransteuerverarbeitungseinrichtung einen Bereich mit hoher Haftleistungsfähigkeit mit einer Straßenoberfläche durch Anlegen des Radsturzwinkels an das vorbestimmte Fahrzeugrad in Kontakt bringt, und

die zweite Aktoransteuerverarbeitungseinrichtung einen Bereich mit einem niedrigem Rollwiderstand mit der Straßenoberfläche durch Beenden eines Anlegens des Radsturzwinkels an das vorbestimmte Fahrzeugrad in Kontakt bringt.

## Revendications

1. Dispositif de commande de carrossage, **caractérisé en ce qu'**il comprend :

une carrosserie (11) d'un véhicule ;

une pluralité de roues de véhicule (WLF, WRF, WLB, WRB) prévues de manière à pouvoir tourner par rapport à la carrosserie (11) ;

un actionneur (31, 32, 33, 34), prévu entre une roue de véhicule prescrite parmi les roues de véhicule (WLF, WRF, WLB, WRB) et la carrosserie (11), pour appliquer un angle de carrossage et annuler l'application de cet angle à la roue de véhicule prescrite ;

un premier moyen de traitement d'entraînement d'actionneur permettant d'appliquer l'angle de carrossage à la roue de véhicule prescrite par l'entraînement de l'actionneur (31, 32, 33, 34) si une condition d'application d'angle de carrossage est établie ; et

un deuxième moyen de traitement d'entraînement d'actionneur pour annuler l'angle de carrossage appliqué à la roue de véhicule prescrite par l'entraînement de l'actionneur (31, 32, 33, 34) si une condition d'annulation d'application d'angle de carrossage est établie, **caractérisé en ce que**

une vitesse d'actionnement pour entraîner l'actionneur (31, 32, 33, 34) par le premier moyen de traitement d'entraînement d'actionneur est supérieure à une vitesse d'actionnement pour entraîner l'actionneur par le deuxième moyen de traitement d'entraînement d'actionneur.

2. Dispositif de commande de carrossage selon la revendication 1, dans lequel

l'actionneur (31, 32, 33, 34) comporte un moteur électrique (41) qui sert de section d'entraînement pour appliquer l'angle de carrossage et annuler l'application de cet angle à la roue de véhicule prescrite.

3. Dispositif de commande de carrossage selon la revendication 2, dans lequel
le premier moyen de traitement d'entraînement d'actionneur entraîne le moteur électrique (41) à une première vitesse de rotation, et
le deuxième moyen de traitement d'entraînement d'actionneur entraîne le moteur électrique (41) à une deuxième vitesse de rotation qui est inférieure à la première vitesse de rotation.

4. Dispositif de commande de carrossage selon la revendication 2, dans lequel
le premier moyen de traitement d'entraînement d'actionneur fournit une première puissance au moteur électrique (41), et
le deuxième moyen de traitement d'entraînement d'actionneur fournit une deuxième puissance qui est inférieure à la première puissance au moteur électrique (41).

5. Dispositif de commande de carrossage selon la revendication 1, dans lequel
l'actionneur (31, 32, 33, 34) comporte un vérin hydraulique (71) qui sert de section d'entraînement pour appliquer l'angle de carrossage et annuler l'application de cet angle à la roue de véhicule prescrite.

6. Dispositif de commande de carrossage selon l'une quelconque des revendications 1 à 5, dans lequel
le premier moyen de traitement d'entraînement d'actionneur applique un angle de carrossage négatif à la roue de véhicule prescrite.

7. Dispositif de commande de carrossage selon l'une quelconque des revendications 1 à 6, dans lequel
une pluralité de zones avec différentes performance d'adhérence et résistance au roulement est formée sur un pneu de la roue de véhicule à laquelle l'angle de carrossage est appliqué,
le premier moyen de traitement d'entraînement d'actionneur met en contact une zone ayant une performance d'adhérence élevée avec la surface de route par l'application de l'angle de carrossage à la roue de véhicule prescrite, et
le deuxième moyen de traitement d'entraînement d'actionneur met en contact une zone ayant une faible résistance au roulement avec la surface de route par l'annulation d'application de l'angle de carrossage à la roue de véhicule prescrite.

# F I G . 1

# FIG. 2

# F I G . 3

61 —〜 | ROM | ⟷

62 —〜 | RAM | ⟷

63 —〜 | VEHICLE SPEED SENSOR | →

64 —〜 | STEERING SENSOR | →

65 —〜 | YAW RATE SENSOR | →

66 —〜 | G SENSOR | →

68 —〜 | CAMBER ANGLE SENSOR | →

CONTROL SECTION 〜16

→ | MOTOR DRIVE SECTION | 82 → | MOTOR | 41

← ▢〜83

# F I G . 4

sh1

A

w1

81 q1

P

42

EP 2 436 541 B1

FIG. 6

| | |
|---|---|
| 61 | ROM |
| 62 | RAM |
| 63 | VEHICLE SPEED SENSOR |
| 64 | STEERING SENSOR |
| 65 | YAW RATE SENSOR |
| 66 | G SENSOR |
| 68 | CAMBER ANGLE SENSOR |

CONTROL SECTION 16

84 — MOTOR 41

FIG. 5

MOTOR TORQUE T

MOTOR ROTATIONAL SPEED N

L1, L2, Td, Ta, Nd, Na

# FIG.7

EP 2 436 541 B1

# F I G . 8

```
                    ┌─────────────┐
                    │    START    │
                    └──────┬──────┘
                           │
                          S1
                    ╱─────────────╲              ┌──────────────────────┐
                   ╱  CAMBER-ON    ╲      Y       │  MOTOR FORWARD       │ S2
                   ╲  COMMAND      ╱──────────────│  DRIVE PROCESS       │
                    ╲  OUTPUT?    ╱               └──────────────────────┘
                     ╲───────────╱
                           │ N
                          S3
         N          ╱─────────────╲
      ┌─────────────╲  CAMBER-OFF  ╱
      │             ╱  COMMAND     ╲
      │             ╲  OUTPUT?     ╱
      │              ╲───────────╱
      │                    │ Y
      │                    │
      │                   S4
      │             ╱─────────────╲
      │            ╱  CAPACITOR    ╲     N
      │            ╲  CHARGING     ╱──────┐
      │             ╲  COMPLETE?  ╱       │
      │              ╲──────────╱         │
      │                    │ Y            │
      │             ┌──────────────┐      │
      │             │  TURN OFF     │ S5  │
      │             │  CAPACITOR    │     │
      │             │  RELAY        │     │
      │             └──────────────┘      │
      │                    │              │
      │             ┌──────────────┐      │
      │             │  MOTOR REVERSE│ S6  │
      │             │  DRIVE PROCESS│     │
      │             └──────────────┘      │
      │                    │              │
      └────────────────────┤              │
                           │              │
                    ┌──────────────┐      │
                    │  TURN ON      │ S7   │
                    │  CAPACITOR    │      │
                    │  RELAY        │      │
                    └──────────────┘      │
                           │              │
                    ┌─────────────┐       │
                    │    END      │       │
                    └─────────────┘       │
```

# F I G . 9

**EP 2 436 541 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6347802 B

- EP 2036745 A1